# EUROPÄISCHE PATENTSCHRIFT

(11) **EP 2 447 168 B1**
(45) Veröffentlichungstag und Bekanntmachung des Hinweises auf die Patenterteilung: **27.01.2021**
(21) Anmeldenummer: 11181230.1
(22) Anmeldetag: 14.09.2011
(51) Int. Cl.: B65B 5/12, B65B 21/06, B65G 61/00, B65B 65/00, B65G 47/08

(54) **Verfahren und Vorrichtung zum Zusammenstellen eines Gebindes aus befüllten Behältern**
Method and device for gathering a bundle of filled containers
Procédé et dispositif d'assemblage d'une gerbe à partir de récipients remplis

(30) Priorität: 26.10.2010 DE 102010042925
(43) Veröffentlichungstag der Anmeldung: 02.05.2012
(73) Patentinhaber: Krones AG, 93073 Neutraubling (DE)
(72) Erfinder: Hahn, Wolfgang, 93073 Neutraubling (DE); Forsthövel, Jochen, 93059 Regensburg (DE); Senn, Konrad, 93059 Regensburg (DE); Zölfl, Markus, 94526 Metten (DE); Winzinger, Frank, 85354 Freising (DE); Sobiech, Bernd, 93049 Regensburg (DE); Raith, Stefan, 93102 Pfatter (DE); Donhauser, Alexandra, 93047 Regensburg (DE); Berger, Clemens, 93138 Lappersdorf (DE); Hausladen, Josef, 93086 Wörth/Donau (DE)
(74) Vertreter: Grünecker Patent- und Rechtsanwälte PartG mbB

(56) Entgegenhaltungen:
- WO-A1-99/55603
- WO-A1-03/013975
- WO-A1-2008/122480
- DE-A1-102005 039 842
- DE-U1-202005 019 906
- DE-U1-202005 019 906
- US-B1- 7 266 422

## Beschreibung

Die Erfindung betrifft ein Verfahren und eine Vorrichtung zum Zusammenstellen eines Gebindes aus befüllten Behältern in einer Abfüllanlage, insbesondere für Getränke oder pharmazeutische Produkte.

Die Kommissionierung in Abfülllinien befüllter Behälter, wie beispielsweise Getränkeflaschen, erfolgt üblicherweise mit Palettier- oder Verpackungsrobotern, die die befüllten Behälter in Gebinden, wie beispielsweise Sammelgebinden oder Transportgebinden zusammenstellen. Beispielsweise werden gleichartige Behälter zunächst in Sammelgebinden, wie Kästen, Kartonverpackungen, Foliengebinden oder dergleichen, zusammengefasst und anschließend auf einer Palette als Transportgebinde zur Auslieferung verpackt.

Die WO 99/55603 A1 beschreibt eine Anlage zum Sammeln, Umsetzen und Palettieren von Ieeren Kunststoffflaschen. Hierbei können unterschiedliche Palettengrößen und/oder Flaschenformate verarbeitet werden.

Die WO 2008/22480 A1 beschreibt eine Vorrichtung zum mehrlagigen Stapeln von Packstücken auf Paletten, wobei zwei parallel betriebene Fördereinrichtungen vorgesehen sind, um unterschiedliche Packstücke auf einer zu bearbeitenden Palette möglichst flexibel und stabil anzuordnen. Die Vorrichtung eignet sich insbesondere zum Stapeln quaderförmiger Packstücke.

Die DE 20 2005 019906 U1 beschreibt einen Mischpacker, mit dem Flaschen unterschiedlichen Sortengebinden entnommen und zu einem Mischgebinde zusammengestellt werden können, insbesondere zu sogenannten Rainbow-Packs.

Die US 7,266,422 B1 beschreibt eine Palettierstation für Pakete, Kisten oder dergleichen, wobei Packstücke unterschiedlicher Größe in einer zufälligen Reihenfolge von einem Förderband in den Bereich eines Industrieroboters transportiert werden. Dort werden die Packstücke hinsichtlich unterschiedlicher Kriterien klassifiziert und nach priorisierten Palettierregeln auf möglichst stabile und effiziente Weise auf mehrere Paletten verteilt.

Die DE 10 2005 039 842 A1 offenbart das Zusammenstellen von Mischgebinden aus Behältern, die sich hinsichtlich darin enthaltener Produkte unterscheiden.

Die Anzahl der auf einer Palette transportierbaren Behälter ist beispielsweise durch die Packungsdichte der Behälter in einer Gebindelage und die maximal zulässige Topload-Belastbarkeit der Behälter beschränkt. Beispielsweise bleiben bei Flaschen mit rundem Querschnitt zwangsläufig beträchtliche Flächenbereiche der Palette für den Transport ungenutzt. Bei einer mehrlagigen Anordnung der Behälter auf der Transportpalette ist die Anzahl der Lagen unter anderem dadurch beschränkt, dass die Behälter der untersten Lage nur mit einem bestimmten Gewicht durch die darüber befindlichen Lagen beaufschlagt werden dürfen. Diese Beschränkung wird im Allgemeinen durch die Topload-Belastbarkeit der Behälter vorgegeben.

Da Abfüllanlagen für Getränke oder pharmazeutische Produkte zunehmend komplexer werden und die Herstellung unterschiedlicher Behälter ermöglichen, wäre es wünschenswert, auch die Kommissionierung und Verpackung der Behälter flexibler zu gestalten, insbesondere hinsichtlich einer besseren Ausnutzung der zur Verfügung stehenden Palettenfläche und des erlaubten Gebindevolumens und Gebindegewichts. Es besteht somit der Bedarf für ein in dieser Hinsicht verbessertes Verfahren zum Zusammenstellen von Gebinden und für eine entsprechend verbesserte Vorrichtung zum Verpacken und Kommissionieren befüllter Behälter.

Die gestellte Aufgabe wird gelöst mit einem Verfahren zum Zusammenstellen eines Sammelgebindes nach Anspruch 1. Demnach werden die befüllten Behälter in einem Schritt a) in Form von Glasflaschen, Kunststoffflaschen, Kanistern, Fässern und/oder Kunststoffbeuteln bereitgestellt, wobei die Behälter mindestens einen ersten und einen zweiten Behältertyp umfassen, und wobei sich der erste und der zweite Behältertyp hinsichtlich mindestens eines Behälterparameters aus der folgenden Parametergruppe unterscheiden: Höhe, Grundflächeninhalt, Grundflächenform und der mechanischen Belastbarkeit des Behälters. Weiterhin ist ein Schritt b) zum Anordnen der bereitgestellten Behälter auf einem Gebindeträger vorgesehen, wobei die Anordnung der Behälter bezüglich der Anzahl und/oder der Position und/oder der Drehlage der Behälter auf dem Gebindeträger in Abhängigkeit von dem mindestens einen Behälterparameter des ersten und zweiten Behältertyps erfolgt. Dadurch ist es möglich, unterschiedliche Behältertypen auf einem Gebindeträger zu kombinieren und folglich die Flexibilität der Kommissionierung zu erhöhen.

Das Gebinde ist ein Sammelgebinde, wie beispielsweise ein Kasten, eine Kartonverpackung oder eine Folienverpackung mit Behältern, im Unterschied zu einem Transportgebinde, wie beispielsweise einer Palette mit Behältern oder Sammelgebinden. Der Gebindeträger kann eine Palette sein, ein Kasten, ein Karton oder eine Folienverpackung. Das Gebinde kann in bekannter Weise Befestigungsmittel umfassen, wie beispielsweise Gurte oder Folien, um die Behälter auf dem Gebindeträger zu befestigen. Die Position des jeweiligen Behälters auf dem Gebindeträger kann sowohl eine Position innerhalb einer Lage der Behälter auf dem Gebindeträger sein als auch eine vertikale Position des Behälters bezüglich des Gebindeträgers, also die Zugehörigkeit zu einer bestimmten Lage von Behältern auf dem Behälterträger. Die Behälter können beispielsweise Kunststoffflaschen aus PET oder dergleichen sein.

Die mechanische Belastbarkeit des Behälters ist insbesondere eine Topload-Belastbarkeit und/oder eine höhere Widerstandskraft des Behälters gegenüber seitlich einwirkenden Kräften, wie beispielsweise durch ein Anpressen von Gegenständen oder mechanische Schläge verursacht.

Der Begriff "Anordnung in Abhängigkeit von" ist im Sinne der Erfindung so zu interpretieren, dass in einem herzustellenden Gebinde mit mehreren Behältertypen für jeden Behältertyp eine bestimmte Anzahl möglicher Positionen existiert, die mit den jeweiligen Behältertypen in einer nicht näher festgelegten Reihenfolge zu bestücken sind. Die Lage der Positionen kann beispielsweise im Vorfeld für bestimmte Produktionsabläufe fest vorgegeben werden oder in Abhängigkeit eines abzuarbeitenden Kommissionierungsauftrags bedarfsabhängig verändert werden. Die jeweils möglichen Positionen werden derart vorgegeben, dass die zu kommissionierenden Behälter in einem Gebinde mit möglichst hoher Packungsdichte, mechanischer Stabilität und/oder optimierter Topload-Belastbarkeit zusammen gefasst werden. Als Auswahlkriterium für die Vergabe der möglichen Positionen dienen die oben spezifizierten Behälterparameter.

Vorzugsweise hat der erste Behältertyp eine höhere Topload-Belastbarkeit und ist insbesondere höher als der zweite Behältertyp. Bei dieser Konfiguration kann eine aufliegende Last von den stabileren Behältern des ersten Behältertyps aufgenommen werden. Entsprechend kann eine Beschädigung der Behälter des zweiten Behältertyps durch eine aufliegende Last vermieden werden. Hierbei ist es insbesondere vorteilhaft, wenn die Last die Behälter des zweiten Behältertyps nicht berührt.

Bei einer besonders vorteilhaften Ausgestaltung hat der erste Behältertyp eine höhere Topload-Belastbarkeit als der zweite Behälter, und die Behälter werden in mindestens einer oberen und einer unteren Lage derart auf dem Gebindeträger angeordnet, dass die Anzahl der Behälter des ersten Behältertyps in der unteren Lage größer ist als in der oberen Lage. Dadurch lässt sich die Topload-Belastbarkeit in jeder Lage bezüglich der jeweils tatsächlich aufliegenden Last optimieren. Folglich lässt sich die Gesamtlast in einem Gebinde derart verteilen, dass die Anzahl an Behältern pro Gebindeträger maximiert wird.

Bei einer besonders vorteilhaften Ausgestaltung hat der erste Behältertyp eine höhere Topload-Belastbarkeit als der zweite Behälter, und die Behälter sind zu einem in der Draufsicht polygonalen Gebinde zusammengestellt, wobei an den Eckpositionen des Gebindes Behälter des ersten Behältertyps angeordnet werden. Dadurch kann die Belastbarkeit des Gebindes gegenüber Transportschäden erhöht werden. Außerdem führt die Anordnung der stabileren Behälter des ersten Behältertyps an den Eckpositionen zu einer insgesamt stabileren Anordnung der Behälter auf dem Gebindeträger, insbesondere bei einer mehrlagigen Anordnung der Behälter auf dem Gebindeträger.

Vorteilhafterweise herrscht in den Behältern des ersten Behältertyps ein höheren Druck als in den Behältern des zweiten Behältertyps. Insbesondere bei Kunststoffbehältern lassen sich so Behälter mit einer höheren mechanischen Belastbarkeit, insbesondere mit einer höheren Topload-Belastbarkeit bereitstellen. Eine Erhöhung der Topload-Belastbarkeit lässt sich jedoch auch durch eine erhöhte Wandstärke der Behälter des ersten Behältertyps oder durch den Einsatz eines entsprechend stabileren Materials bewirken. Beispielsweise könnten die Behälter des ersten Behältertyps aus Glas gefertigt sein und die Behälter des zweiten Behältertyps aus Kunststoff. Da üblicherweise Mehrwegbehälter eine höhere Wandstärke aufweisen als Einwegbehälter, und somit eine höhere Topload-Belastbarkeit, können die Behälter des ersten Behältertyps vorzugsweise Mehrwegbehälter sein und die Behälter des zweiten Behältertyps Einwegbehälter.

Vorzugsweise sind die Behälter vom ersten Behältertyp Flaschen und die Behälter vom zweiten Behältertyp Beutel. Dadurch lassen sich flexible Behälter mit geringer mechanischer Belastbarkeit von starren Behältern mit vergleichweise hoher mechanischer Belastbarkeit stabilisieren und schützen. Insbesondere bei einer mehrlagigen Anordnung der befüllten Behälter auf dem Gebindeträger lassen sich Beutel auf diese Weise auch in untere Lagen mit entsprechend hohen aufliegenden Lasten integrieren. Außerdem lassen sich Beutel bei einer Anordnung zwischen Flaschen flexibel verformen, um eine besonders effiziente Ausnutzung der zur Verfügung stehenden Grundfläche des Behälterträgers zu ermöglichen. Anders gesagt, können Beutel sich auf dem Gebindeträger zumindest abschnittsweise an die Wand benachbarter Flaschen anschmiegen, um den Freiraum zwischen den Beuteln und den Flaschen zu minimieren.

Bei einer bevorzugten Ausgestaltung weisen die Behälter des ersten und des zweiten Behältertyps unterschiedliche Grundflächen auf. Außerdem ist zumindest die Grundfläche des ersten oder zweiten Behältertyps polygonal, und zumindest zwei Begrenzungslinien benachbarter polygonaler Grundflächen sind parallel oder orthogonal zueinander ausgerichtet. Dadurch lässt sich eine in der Draufsicht besonders hohe Packungsdichte der Behälter auf dem Behälterträger erzielen. Insbesondere lässt sich mit dieser Variante eine höhere Packungsdichte erzielen als bei der Kombination von Flaschen mit ausschließlich runden Querschnitten. Beispielsweise erlaubt diese Konfiguration eine Anordnung der Behälter des ersten und des zweiten Behältertyps derart, dass das Verhältnis der Summe der von den Behältern eingenommenen Grundflächen zu der von der gemeinsamen Umfangslinie um die Grundflächen der Behälter eingeschlossenen Ladefläche des Behälterträgers größer ist als 0,8, insbesondere größer als 0,9. Anders gesagt, beträgt der Flächenanteil des verbleibenden Freiraums zwischen den Behältern dann nur 20% der Gebindegrundfläche, insbesondere nur 10%.

Bei einer bevorzugten Ausgestaltung wird den Behältern dem jeweiligen Behältertyp entsprechend jeweils mindestens ein Kennzeichen zugeordnet. Außerdem werden das Bereitstellen im Schritt a) und/oder das Anordnen im Schritt b) in Abhängigkeit von dem mindestens einem Kennzeichnen gesteuert. Dadurch können die Schritte a) und/oder b) besonders schnell und zuverlässig durchgeführt werden. Insbesondere ist ein ständiger Abgleich zwischen der für die Kommissionierung verfügbaren und benötigten Behälter eines bestimmten Behältertyps bei laufender Produktion möglich.

Vorzugsweise wird das Kennzeichen auf den Behältern angebracht, und/oder das Kennzeichen ist eine elektronische Positionsmarke des jeweiligen Behälters bezüglich des laufenden Produktionsstroms. Auf den Behältern angebrachte Kennzeichen, wie beispielsweise Aufdrucke, oder andere berührungslos auslesbare Markierungen, beispielsweise zur Identifikation mittels elektromagnetischer Wellen (RFID), erlauben eine zuverlässige Auswahl der Behälter beim Bereitstellen und/oder beim Anordnen auf dem Gebindeträger. Das Zuordnen einer elektronischen Positionsmarke in einem Steuerprogramm kann beispielsweise bereits beim Herstellen der Behälter oder beim Befüllen der Behälter erfolgen, so dass die Position des jeweiligen Behälters im Produktionsstrom nach der Zuordnung der Positionsmarke in der Abfülllinie jederzeit bekannt ist. Die Positionsmarke könnte auch bei einer Inspektion der Behälter in der Abfülllinie zugeordnet werden. Dadurch können die jeweiligen Behälter bereits vor der Bereitstellung auf geeignete Fördergassen verteilt werden, so dass die Zuordnung beim Bereitstellen und/oder beim Anordnen der Behälter auf dem Gebindeträger vereinfacht wird. Anders gesagt, könnten elektronische Positionsmarken in einem Steuerprogramm in jedem dafür geeigneten Produktsschritt erzeugt werden.

Vorzugsweise erfolgt das Bereitstellen im Schritt a) und/oder das Anordnen im Schritt b) auf Grundlage eines Kommissionierungsauftrags automatisch. Dadurch können beispielsweise für spezielle Kundenanforderungen optimierte Gebinde zusammengestellt werden. Beispielsweise könnte die Topload-Belastbarkeit der Behälter optimal ausgenutzt werden, um die angeforderte Menge an Behältern in möglichst wenigen Transportgebinden ausliefern zu können.

Bei einer bevorzugten Ausgestaltung werden im Schritt a) die Behälter des ersten und des zweiten Behältertyps von einer gemeinsamen Einwegbehälterlinie bereitgestellt, oder die Behälter des zweiten Behältertyps werden von einer Einwegbehälterlinie und die Behälter des ersten Behältertyps von einer parallel betriebenen Mehrwegbehälterlinie bereitgestellt. Dadurch lassen sich zusätzliche Produktionsschritte zum Zwischenlagern und Puffern der Behälter vermeiden oder zumindest im Umfang reduzieren. Bei einer Kombination einer Mehrwegbehälterlinie mit einer Einwegbehälterlinie können beispielsweise die in der Regel stabileren Mehrwegbehälter als die Behälter vom ersten Behältertyp eingesetzt werden, insbesondere zur Erhöhung der Topload-Belastbarkeit einer Gebindelage. Beispielsweise könnten von der Mehrwegbehälterlinie Glasflaschen übernommen werden und von der Einwegbehälterlinie Kunststoffflaschen. Es könnte auch eine Behälterlinie karbonisierte Produkte und die andere stille Produkte abfüllen. Durch den Innendruck sind die karbonisierten Flaschen stabiler als die Flaschen mit stillen Produkten. Im Schritt a) könnten die Behälter auch von zwei Mehrweglinien bereitgestellt werden.

Die gestellte Aufgabe wird auch gelöst mit einem Verfahren zum Herstellen eines Gebindes aus befüllten Behältern in einer Abfüllanlage, das neben dem vorstehend beschriebenen erfindungsgemäßen Verfahren ferner ein Verfahren zum Streckblasen der zu befüllenden Behälter aus Vorformlingen umfasst, wobei die Vorformlinge voneinander unabhängig vorgewärmt und beim Blasen mit Hilfe separater Linearmotorantriebe gestreckt werden und/oder die Behälter mit unterschiedlichen Drücken und/oder Blaszeitpunkten geblasen werden. Eine derartige Konfiguration eignet sich besonders gut, um unterschiedliche Behälter aus einer gemeinsamen Abfüllanlage bereitzustellen. Beispielsweise könnte aus identischen Vorformlingen nach jeweils unterschiedlicher Vorwärmung und unterschiedlicher Streckung der Vorformlinge Behälter unterschiedlicher Größe und unterschiedlicher Wandstärke bereitgestellt werden. Denkbar wäre z.B. die Herstellung eines ersten Behältertyps mit vergleichsweise großer Wandstärke und kleinem Volumen und eines zweiten Behältertyps mit vergleichsweise geringer Wandstärke und großem Volumen.

Die gestellte Aufgabe wird ferner gelöst mit einer Vorrichtung nach Anspruch 13. Demnach umfasst die erfindungsgemäße Vorrichtung eine Bereitstellungseinrichtung zum Bereitstellen unterschiedlicher befüllter Behälter in Form von Glasflaschen, Kunststoffflaschen, Kanistern, Fässern und/oder Kunststoffbeuteln, wobei die Behälter mindestens einen ersten und einen zweiten Behältertyp umfassen, die sich hinsichtlich mindestens eines der folgenden Behälterparameter unterscheiden: Höhe, Grundflächeninhalt, Grundflächenform und mechanische Belastbarkeit des Behälters. Außerdem ist eine Positioniereinrichtung zum Anordnen der bereitgestellten Behälter auf einem Gebindeträger vorgesehen, wobei die Positioniereinrichtung derart ausgebildet ist, dass sie die Behälter bezüglich der Anzahl und/oder der Position und/oder der Drehlage der Behälter in Abhängigkeit von dem mindestens einen unterschiedlichen Behälterparameter des ersten und zweiten Behältertyps anordnen kann. Die Bereitstellungseinrichtung kann beispielsweise eine Fördereinrichtung mit mehreren Gassen sein, wobei die einzelnen Behältertypen auf jeweils zugeordneten Gassen bereitgestellt werden. Die Bereitstellungseinrichtung kann ebenso Puffer umfassen, um auch bei wechselnden Produktionsbedingungen eine geeignete Anzahl der jeweils benötigten Behälter bereitstellen zu können. Die Positioniereinrichtung kann beispielsweise ein Palettierroboter oder Verpackungsroboter sein, der die Behälter aus der Bereitstellungseinrichtung gezielt entnehmen und auf den Gebindeträgern abstellen kann. Mit der erfindungsgemäßen Vorrichtung lassen sich die gleichen Vorteile erzielen wie mit dem beschriebenen erfindungsgemäßen Verfahren. Zu diesem Zweck ist die erfindungsgemäße Vorrichtung vorzugsweise zur Durchführung mindestens einer der vorstehend beschriebenen Verfahrensvarianten ausgebildet.

Vorzugsweise umfasst die erfindungsgemäße Vorrichtung eine Kennzeichnungseinrichtung, um den Behältern jeweils mindestens ein dem Behältertyp entsprechendes Kennzeichen zuzuordnen.

Bei einer besonders günstigen Ausgestaltung ist die Kennzeichnungseinrichtung derart ausgebildet, dass eine Markierung an den Behältern angebracht werden kann, und/oder dass ein Steuersignal als elektronische Positionsmarke erzeugt werden kann, das dem jeweiligen Behälter eine Position im laufenden Produktionsstrom zuweist. Die Kennzeichnungseinrichtung kann beispielsweise eine Etikettiervorrichtung sein. Ebenso denkbar ist eine Inspektionsvorrichtung, die dem Behälter beim Durchlaufen derselben ein entsprechendes Steuersignal als elektronische Positionsmarke zuweist. Ein elektronisches Kennzeichen könnte auch bei der Herstellung der Behälter erzeugt werden. Entscheidend ist, dass die Kennzeichnungseinrichtung den jeweiligen Behälter derart kennzeichnet, dass eine eindeutige Zuordnung im Bereich der Bereitstellungseinrichtung möglich und somit eine korrekte Auswahl des jeweils zu positionierenden Behältertyps durch die Positioniereinrichtung.

Vorzugsweise ist ferner eine Steuereinrichtung vorgesehen, die so ausgebildet ist, dass die Bereitstellungseinrichtung und/oder die Positioniereinrichtung mit Hilfe des jeweils zugeordneten Kennzeichens gesteuert werden kann. Dies ermöglicht eine Automatisierung des Kommissioniervorgangs, beispielsweise indem ein Auftrag zur Herstellung eines bestimmten Gebindes in Abhängigkeit von den jeweils an der Bereitstellungseinrichtung zur Verfügung stehenden Behältern ausgeführt wird. Anders gesagt, können unterschiedliche Gebinde in einer optimierten Reihenfolge und/oder in möglichst kurzer Zeit zusammengestellt werden. In der Steuerungseinrichtung sind vorzugsweise auch behälterspezifische Parameter hinterlegt, beispielsweise in Form charakteristischer Eigenschaften des Behältertyps und/oder des Füllguts. Somit lassen sich nicht nur die Gebinde bezüglich der Packungsdichte optimieren sondern auch der zeitliche Ablauf des Kommissionierungsprozesses.

Vorzugsweise ist die Bereitstellungseinrichtung im Produktstrom hinter einer Einwegbehälterlinie zur Abfüllung der Behälter des ersten und des zweiten Behältertyps angeordnet, oder hinter einer Mehrwegbehälterlinie zur Abfüllung der Behälter des ersten Behältertyps und einer Einwegbehälterlinie zur Abfüllung der Behälter des zweiten Behältertyps. Diese Konfigurationen erlauben eine besonders flexible Bestückung der Gebindeträger mit unterschiedlichen Behältern. Insbesondere können auf diese Weise Behälter mit unterschiedlicher Topload-Belastbarkeit in geeigneter Weise auf einem Gebindeträger kombiniert werden. Alternativ sind auch zwei Mehrweglinien möglich

Die erfindungsgemäße Aufgabe wird ferner gelöst mit einer Vorrichtung zum Herstellen von Gebinden, bei dem neben der vorstehend beschriebenen Vorrichtung ferner eine Streckblasmaschine mit einer Vorwärmeinrichtung mit Einzel-Heizkammern zum voneinander unabhängigen Vorwärmen einlaufender Vorformlinge vorgesehen ist sowie von Linearmotoren individuell angetriebene Reckdorne. Eine derartige Streckblasmaschine eignet sich besonders gut zum Herstellen unterschiedlicher Behälter, so dass Behälter unterschiedlicher Behältertypen von einer durchgehenden Produktionslinie kontinuierlich bereitgestellt werden können. Dies verringert den nötigen Aufwand für Zwischenlagerung und Pufferung unterschiedlicher Behältertypen.

Bevorzugte Ausführungsformen der Erfindung sind in der Zeichnung dargestellt. Es zeigen:
- Fig. 1: eine Ausführungsform einer erfindungsgemäßen Vorrichtung zum Zusammenstellen von Gebinden;
- Fig. 2: ein erstes Beispiel für ein erfindungsgemäß zusammengestelltes Gebinde in der Draufsicht;
- Fig. 3: ein zweites Beispiel für ein erfindungsgemäß zusammengestelltes Gebinde in der Draufsicht;
- Fig. 4: ein drittes Beispiel für ein erfindungsgemäß zusammengestelltes Gebinde in der Draufsicht;
- Fig. 5: ein viertes Beispiel für ein erfindungsgemäß zusammengestelltes Gebinde in der Draufsicht;
- Fig. 6: ein fünftes Beispiel für ein erfindungsgemäß zusammengestelltes Gebinde in der Draufsicht;
- Fig. 7A: ein sechstes Beispiel für ein erfindungsgemäß zusammengestelltes Gebinde in der Draufsicht; und
- Fig. 7B: das Gebinde der Fig. 7A in einer Seitenansicht.

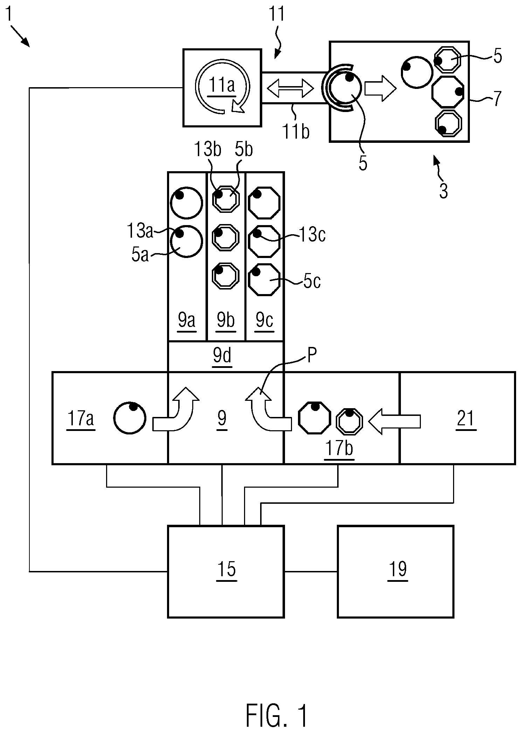

Wie die Fig. 1 erkennen lässt, umfasst eine Ausführungsform der erfindungsgemäßen Vorrichtung 1 zum Zusammenstellen von Gebinden 3 aus befüllten Behältern 5 auf Gebindeträgern 7 eine Bereitstellungsvorrichtung 9 zum Bereitstellen unterschiedlicher Behältertypen 5a-5c und eine Positioniereinrichtung 11 zur selektiven Übernahme der Behälter 5 der Behältertypen 5a-5c und zur Positionierung derselben auf dem Behälterträger 7.

Die Bereitstellungsvorrichtung 9 ist beispielsweise eine Transport- und/oder Puffereinrichtung mit mehreren Gassen 9a-9c zum selektiven Bereitstellen unterschiedlicher Behälter 5, die nachfolgend der Einfachheit halber auch als Behältertypen 5a-5c bezeichnet werden. Das Bereitstellen auf separaten Transportgassen 9a-9c dient einer einfacheren Übernahme der Behältertypen 5a-5c durch die Positioniereinrichtung 11. Derartige separate Gassen 9a-9c sind jedoch nicht zwingend erforderlich. Dies ist insbesondere dann der Fall, wenn für jeden Behälter 5 jeweils mindestens ein Kennzeichen 13a-13c zur Identifikation des jeweiligen Behältertyps 5a-5c vorgesehen ist.

Die Kennzeichen 13a-13c ordnen jeden Behälter 5 einem der Behältertypen 5a-5c eindeutig zu. Dadurch ist es möglich, die Behälter 5 durch Erkennen der Kennzeichen 13a-13c gezielt zu übernehmen und auf dem Gebindeträger 7 abzustellen. In Fig. 1 sind die Kennzeichen 13a-13c als auf den Behältern 5 vorgesehene Markierungen dargestellt. Diese könnten beispielsweise ein optisch identifizierbarer Aufdruck oder ein elektromagnetisch, insbesondere berührungslos auslesbares Etikett oder dergleichen sein.

Die Kennzeichen 13a-13c müssen jedoch nicht materiell auf den Behältern 5 vorgesehen sein. Die Kennzeichen 13a-13c könnten auch elektronische Positionsmarken sein, die im Laufe des Produktions- und Abfüllprozesses an geeigneter Stelle der Produktionslinie an jeden der Behälter 5 im Rahmen eines Steuerprogramms vergeben werden. Anders gesagt, erlaubt eine elektronische Positionsmarke im Sinne der Erfindung eine Bestimmung der Relativposition des Behälters 5 im Produktionsstrom P. Somit kann auch der Zeitpunkt bestimmt werden, an dem der Behälter 5 an der Bereitstellungseinrichtung 9 zur Positionierung auf dem Gebindeträger 7 bereit steht. Derartige Positionsmarken könnten beispielsweise beim Herstellen der noch ungefüllten Behälter 5 vergeben werden, beim Befüllen der Behälter 5 oder bei einem beliebigen Inspektionsvorgang während der Produktion, aber auch durch eine separate Inspektionsvorrichtung 9d im Bereich der Bereitstellungseinrichtung 9.

Die Positioniereinrichtung 11 ist beispielsweise ein Roboter, der die Behälter 5 automatisiert von der Bereitstellungseinrichtung 9 an die Gebindeträger 7 übergeben kann. Derartige Roboter sind aus dem Stand der Technik bekannt und werden daher nicht näher erläutert. Lediglich der Übersichtlichkeit halber sind in Fig. 1 eine drehbare Plattform 11a und ein radial verschiebbarer Greifarm 11b als Bestandteile der Positioniereinrichtung 11 schematisch angedeutet.

Zur Steuerung der Positioniereinrichtung 11 ist eine Steuereinheit 15 vorgesehen. Diese kommuniziert vorzugsweise auch mit der Bereitstellungseinrichtung 9. Die Steuerungseinrichtung 15 ermöglicht es, an der Bereitstellungseinrichtung 9 Behälter 5 des jeweils für die Bestückung des Gebindeträgers 7 vorgesehenen Behältertyps 5a-5c bereitzustellen, insbesondere auch bedarfsabhängig, und die Positioniereinrichtung 11 anzuweisen, den bereitgestellten Behältertyp 5a-5c zu ergreifen und an einer dem jeweiligen Behältertyp zugeordneten, freien Position auf dem Gebindeträger 7 abzusetzen.

Die Steuereinheit 15 könnte Prozessparameter zur optimierten Bestückung der Gebindeträger 7 berechnen. Beispielsweise wäre eine automatisch Topload-Berechnung denkbar, um zu berechnen, in wie vielen Lagen die Behälter 5 in einem Gebinde 3 aufeinander stehen dürfen, ohne die Behälter 5 zu beschädigen. Ebenso denkbar ist eine automatische Verteilung der Behälter 5 auf unterschiedliche Lagen, um deren Belastbarkeit an die jeweils zu tragende Last anzupassen. Mit Hilfe der Steuereinheit 15 könnten die Behälter 5 ebenso in der jeweils benötigten Anzahl auf die Transportgassen 9a-9c verteilt werden.

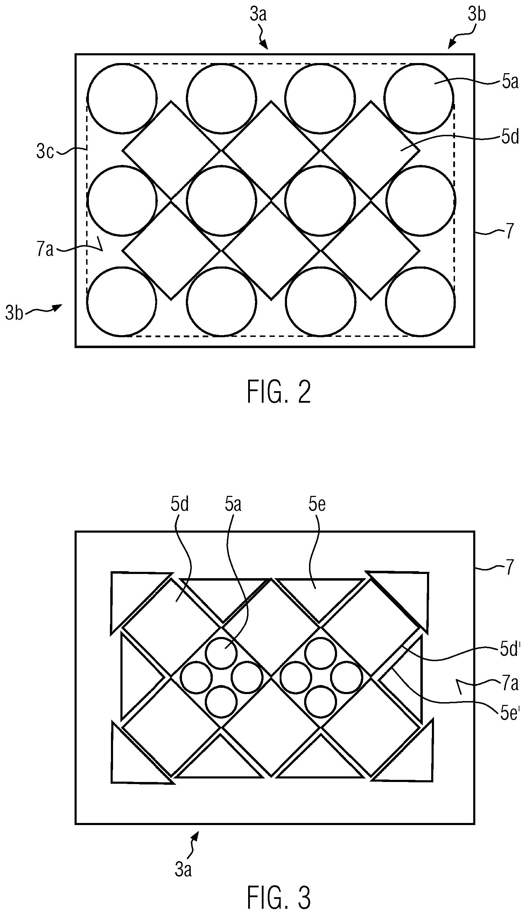

Die Bereitstellungseinrichtung 9 wird vorzugsweise von mindestens einer Abfülllinie 17a, 17b gespeist. In Fig. 1 sind beispielhaft zwei Abfülllinien 17a, 17b stromaufwärts vor der Bereitstellungseinrichtung 9 dargestellt, wobei die Abfülllinie 17a Mehrwegbehälter vom Behältertyp 5a bereitstellt und die Abfülllinie 17b unterschiedliche Einwegbehälter der beiden Behältertypen 5b, 5c. Dieses Beispiel ist jedoch lediglich illustrativ. Es wäre selbstverständlich möglich, die erfindungsgemäße Vorrichtung 1 und das erfindungsgemäße Verfahren auch mit einer einzelnen Abfülllinie 17a, 17b zu betreiben. Der Behältertyp 5a könnte beispielsweise eine Glasflasche mit rundem Querschnitt sein, der Behältertyp 5b ein dickwandiger Kunststoffbehälter mit polygonalem Querschnitt und der Behältertyp 5c ein dünnwandiger Kunststoffbehälter mit größerem Volumen als der Behältertyp 5b. Wie nachfolgend noch ausführlicher erläutert, sind jedoch vielfältige, davon abweichende Kombinationen unterschiedlicher Behältertypen denkbar, die sich bezüglich der Materialien, Größen und/oder Formen unterscheiden können. Entscheidend ist, dass mindestens zwei unterschiedliche Behältertypen 5a-5c bereitgestellt werden, um den Gebindeträger 7 mit unterschiedlichen Behältern 5 zu bestücken. Die Vorteile einzelner Gebindevarianten werden anhand der Fig. 2 bis 7b noch ausführlicher erläutert.

Als optionale Bestandteile der erfindungsgemäßen Vorrichtung 1 sind in Fig. 1 ferner eine Auftragsvorgabeeinheit 19, eine Streckblasmaschine 21 und die Inspektionseinrichtung 9d angedeutet. Von der Auftragsvorgabeeinheit 19 könnte beispielsweise ein Kundenauftrag zur Kommissionierung an die Steuereinrichtung 15 übermittelt werden, um eine bestimmte Anzahl der Behältertypen 5a-5c optimiert auf mindestens einem Gebindeträger 7 anzuordnen. Die Steuereinrichtung 15 könnte zu diesem Zweck aus vorgegebenen Gesamtmengen der jeweiligen Behältertypen 5a-5c optimierte Gebinde 3 zusammen stellen, um die Packungsdichte auf einzelnen Behälterträgern 7 zu optimieren und/oder die Gebinde 3 in möglichst kurzer Zeit zusammenzustellen.

Die Streckblasmaschine 21 ist vorzugsweise so ausgebildet, dass in ihr unterschiedliche Behältertypen 5b, 5c hergestellt werden können. Dies ist beispielsweise bei einer Konfiguration möglich, in der Vorformlinge in einer nicht dargestellten Heizeinrichtung individuell unterschiedlich erwärmt werden können, beispielsweise in separaten Heizkammern für je einen Vorformling, und bei der die vorgewärmten Vorformlinge mit Hilfe von Reckdornen in der Blasform gestreckt werden, die mit Hilfe von Linearmotoren individuell unterschiedlich angetrieben werden können. Die unterschiedlichen Behältertypen 5b, 5c können somit als Folge eines kontinuierlich laufenden Produktionsprozesses von einer gemeinsamen Produktionslinie hergestellt werden. Entsprechend können die unterschiedlichen Behältertypen 5b, 5c in der gemeinsamen Abfülllinie 17b befüllt werden.

Die Bereitstellungseinrichtung 9 und die Positioniereinrichtung 11 zum Zusammenstellen von Gebinden 3 lassen sich in besonders vorteilhafter Weise mit einer Blasmaschine 21 kombinieren, die die Herstellung unterschiedlicher Behältertypen 5b, 5c ermöglicht. Eine derartige Kombination reduziert den apparativen Aufwand zur Herstellung unterschiedlicher Behältertypen 5b, 5c ebenso wie zur Zwischenspeicherung und Pufferung der zu befüllenden und/oder der befüllten Behälter 5. Die Steuereinrichtung 15 kommuniziert daher vorzugsweise mit der Blasmaschine 21, beispielsweise um den hergestellten Behältern 5b, 5c elektronische Positionsmarken 13b, 13c im laufenden Produktionsstrom zuzuweisen und/oder die Blasmaschine 21 bedarfsabhängig zu steuern.

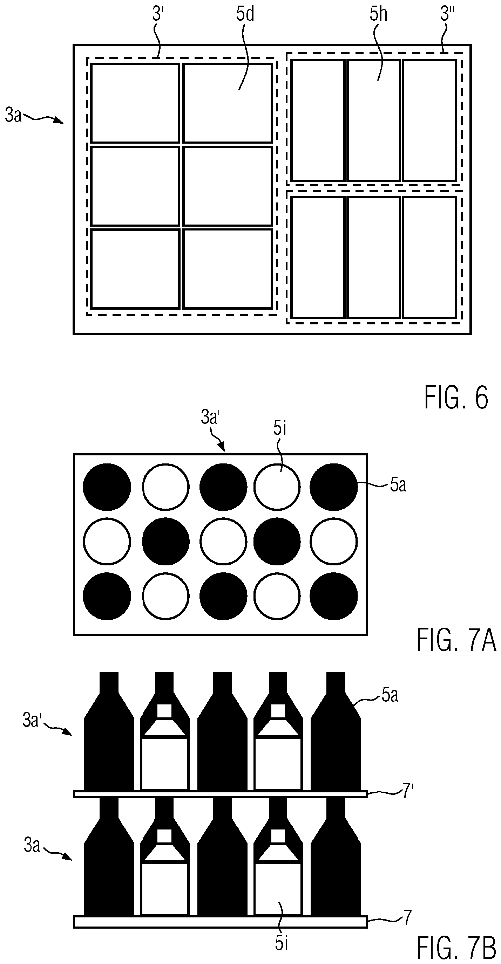

Fig. 2 zeigt ein erstes Beispiel für einen mit unterschiedlichen Behältertypen 5a, 5d bestückten Gebindeträger 7. Dieser könnte beispielsweise eine Transportpalette, ein Verpackungskarton, eine entsprechend stabile Folie oder dergleichen sein. Im Beispiel aus Fig. 2 wird ein erster Behältertyp 5a mit rundem Querschnitt abwechselnd mit einem zweiten Behältertyp 5d mit rechteckigem Querschnitt nebeneinander auf dem Gebindeträger 7 angeordnet. Hierbei repräsentiert die Darstellung der Fig. 2 eine Gebindelage 3a, wobei das Gebinde 3 mindestens eine Gebindelage 3a umfasst, jedoch in der Regel aus mehreren, bei Bedarf unterschiedlichen Gebindelagen 3a, 3a' besteht, wie noch ausführlicher bezüglich Fig. 7B erläutert wird.

Wie die Fig. 2 ferner verdeutlicht, erlaubt die Kombination unterschiedlicher Behältertypen 5a, 5d eine besonders effektive Ausnutzung der Ladefläche 7a des Gebindeträgers 7. Es wäre jedoch auch möglich, unterschiedliche Behältertypen derart nebeneinander anzuordnen, dass die mechanische Belastbarkeit der Gebindelage 3a erhöht wird, insbesondere gegenüber aufliegenden Lasten, oder um besonders empfindliche Behälter 5 durch weniger empfindliche abzuschirmen. Denkbar ist beispielsweise, dass der Behältertyp 5a eine höhere Topload-Belastbarkeit aufweist als der Behältertyp 5d, wobei Behälter 5 mit hoher Topload-Belastbarkeit vorzugsweise im Randbereich der jeweiligen Gebindelage 3a angeordnet werden, insbesondere an den Eckpositionen 3b der Gebindelage 3a. Dadurch können Behälter 5 mit geringer Topload-Belastbarkeit oder mit allgemein geringer mechanischer Widerstandsfähigkeit, hier der Behältertyp 5d, besser vor Transportschäden bewahrt werden. Außerdem kann die Stabilität eines Stapels aus mehreren Gebindelagen 3a, 3a' auf diese Weise erhöht werden.

Die Topload-Belastbarkeit der Behälter 5 kann beispielsweise durch das Behältermaterial beeinflusst werden sowie durch die Wandstärke. Behälter 5 mit der Reihe nach zunehmender Topload-Belastbarkeit wären beispielsweise: Kunststoff-Beutel; dünnwandige Kunststoffflaschen (Einwegflaschen); dickwandige Kunststoffflaschen (Mehrwegflaschen); und Glasflaschen. Außerdem könnte die Topload-Belastbarkeit von Kunststoffflaschen durch den Fülldruck, beispielsweise in Form einer Stickstoff-Beaufschlagung oder aber auch durch den CO₂-Gehalt von karbonisierten Produkten, beeinflusst werden. Beispielsweise könnte der Überdruck in einer unteren Gebindelage 3a 0,5 bis 1,5 bar betragen, in einer oberen Gebindelage 3a dagegen nur 0,1 bis 0,4 bar.

In Fig. 2 ist ferner eine Umfangslinie 3c der Gebindelage 3a um die Grundflächen der Behälter 5 vom Behältertyp 5a, 5d angedeutet. Es ist generell wünschenswert, den Freiraum zwischen den Behältern 5 einer Gebindelage 3a so klein wie möglich zu halten, um die Packungsdichte der Gebindelage 3a zu maximieren. Anders gesagt, möchte man das Verhältnis der aufsummierten Grundflächen aller Behälter 5 einer Gebindelage 3a zu der von der Umfangslinie 3c eingeschlossenen Fläche oder zu der Ladefläche 7a insgesamt maximieren. Beispielsweise können Behälter 5 mit unterschiedlich geformten und/oder unterschiedliche großen Grundflächen derart nebeneinander angeordnet werden, dass das Verhältnis der gesamten Grundfläche der Behälter zu der von der gemeinsamen Umfangslinie 3c um die Grundflächen der Behälter 5 eingeschlossenen Fläche größer ist als 0,8 oder vorzugsweise größer als 0,9.

Die Fig. 3 zeigt eine Gebindelage 3a, bei der ein dritter Behältertyp 5e mit dreieckiger Grundfläche vorgesehen ist. Durch die Kombination unterschiedlicher Grundflächen der Behältertypen 5a, 5d, 5e wird eine besonders effiziente Ausnutzung der zur Verfügung stehenden Ladefläche 7a des Gebindeträgers 7 ermöglicht. Wie der Fig. 3 ferner zu entnehmen ist, kann die Ladefläche 7a besonders effizient ausgenutzt werden, wenn unterschiedliche Behältertypen 5d, 5e mit jeweils polygonaler Grundfläche derart ausgerichtet sind, dass zumindest zwei Begrenzungslinien 5d', 5e' benachbarter Behälter 5 mit polygonalem Querschnitt zueinander im Wesentlichen parallel oder orthogonal ausgerichtet sind. Auf diese Weise lassen sich Behältertypen 5d, 5e mit unterschiedlicher polygonaler Grundfläche mit besonders kleinen Zwischenräumen nebeneinander packen.

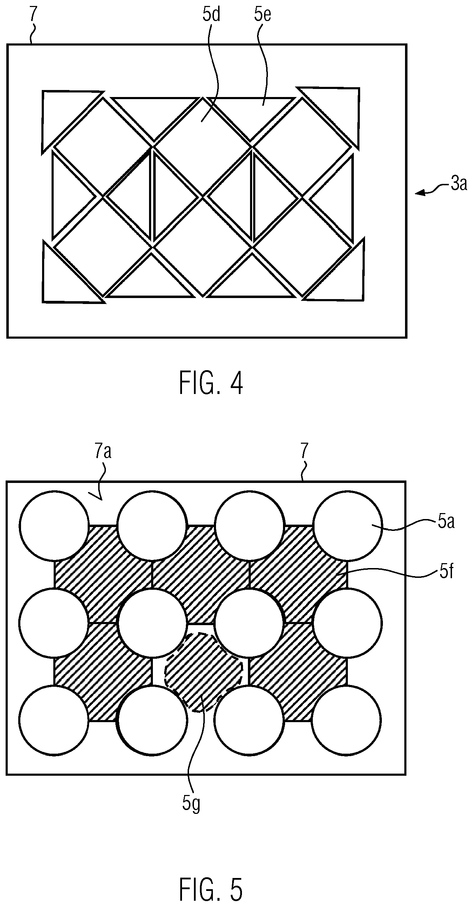

Dies wird auch anhand der Fig. 4 deutlich, bei der die Gebindelage 3a ausschließlich von Behältertypen 5d, 5e mit polygonalem Querschnitt gebildet wird. In diesem Beispiel werden recheckige und dreieckige Querschnitte in besonders günstiger Weise kombiniert. Auch hier könnte, wie schon zur Fig. 2 bemerkt wurde, der außen liegende Behältertyp 5e eine besonders hohe Topload-Belastbarkeit aufweisen, so dass die Gebindelage 3a mit besonders hohen Gewichtslasten beaufschlagt werden kann, stabil gestapelt werden kann und/oder besonders gut gegenüber seitlich von außen einwirkenden Kräften geschützt ist. Ferner verdeutlicht die Fig. 4, dass die unterschiedlichen Behältertypen 5d, 5e nicht nur bezüglich ihrer Position optimal auf dem Gebindeträger 7 verteilt werden sondern auch ihre Drehlage in der Draufsicht zugunsten einer möglichst hohen Packungsdichte und/oder Stabilität der Gebindelage 3a angepasst wird. Im Beispiel wird die Drehlage des Behältertyps 5e mit dreieckiger Grundfläche diesbezüglich optimiert.

Die Fig. 5 zeigt eine Kombination eines ersten Behältertyps 5a mit rundem Querschnitt und eines zweiten (der Übersichtlichkeit halber schraffiert gezeichneten) Behältertyps 5f, an dessen Seitenwänden in der Draufsicht konkave Aussparungen vorgesehen sind, die im Wesentlichen der in der Draufsicht konvexen Außenkontur des ersten Behältertyps 5a entsprechen. Dadurch lassen sich Zwischenräume zwischen den Behältertypen 5a, 5f im Vergleich zu den vorangegangenen Beispielen weiter reduzieren oder gar ganz vermeiden. Behältertypen 5a, 5f mit in der Draufsicht einander entsprechenden Außenkonturen lassen sich zu einer kompakten, blockartigen Gebindelage 3a packen, die eine besonders hohe mechanische Stabilität aufweist.

Wie in Fig. 5 ferner angedeutet ist, könnte der Behältertyp 5f mit konkaver Außenkontur durch einen beutelförmigen Behältertyp 5g ersetzt werden. Starre und somit mechanisch stabile Flaschen 5a und flexible Beutel 5g könnten so in vorteilhafter Weise in einer gemeinsamen Gebindelage 3a kombiniert werden. Die Beutel 5g könnten hierbei jeweils zwischen die starren Behälter 5a gedrückt werden, wobei die Elastizität der Beutel 5g je nach deren Befüllungsgrad eine effiziente Ausnutzung der Ladefläche 7a des Gebindeträgers 7 ermöglicht. Die Beutel 5g können sich hierbei zumindest teilweise an die benachbarten Behälter 5a anschmiegen. Gleichzeitig können die starren Behälter 5a insbesondere im Randbereich der Gebindelage 3a angeordnet werden, um die Beutel 5g von aufliegenden Lasten zu entlasten und gegenüber mechanischen Einflüssen von außen zu schützen, oder um eine stabilen Stapel aus mehreren Gebindelagen 3a, 3a' herzustellen. Hier wäre es vorteilhaft, die starren Behälter 5a höher auszubilden als die Beutel 5g. Bei einer mehrlagigen Anordnung könnten, wie auch bei allen anderen beschriebenen Ausführungsformen, zusätzliche stabilisierende Zwischenlagen vorgesehen sein, beispielsweise Kartons, um eine gleichmäßige Lastenverteilung zwischen den einzelnen Lagen 3a, 3a' zu begünstigen.

Die Fig. 6 zeigt eine weitere Variante einer Gebindelage 3a, bei der ein erstes Sammelgebinde 3' mit Behältern eines ersten Behältertyps 5d und ein zweites Sammelgebinde 3" mit Behältern eines zweiten Behältertyps 5h vorgesehen ist. Somit ist es im Sinne der Erfindung möglich, einzelne Behälter 5 zunächst zu Sammelgebinden 3', 3" zusammen zu stellen und anschließend die Sammelgebinde 3', 3" in einem Transportgebinde zu verpacken. Im Sinne der Erfindung beinhaltet das Zusammenstellen von Gebinden 3 Gebinde aller Art, die sich zur Kommissionierung und zum Transport von befüllten Behältern 5 wie Flaschen oder Beutel eignen. Ebenso ist mindestens ein Gebindeträger 7 vorgesehen. Es ist jedoch auch die Kombination mehrerer Gebindeträger 7 in einem Gebinde 3 denkbar, beispielsweise bei geeigneter Stapelung.

Vorzugsweise können von der Positioniereinrichtung 11 mehrere unterschiedliche Sammelgebinde 3', 3" nacheinander verarbeitet werden, beispielsweise drei Sechserpacks, zehn Zwölferpacks, vier Sechserpacks usw. Unterschiedliche Behälter 5, beispielsweise auch mit unterschiedlichen Füllgütern, Etiketten und/oder Verschlüssen, könnten vor der Bereitstellung auch in einzelnen Pufferbereichen geparkt und je nach Bedarf zur Positionierung auf dem Gebindeträger 7 bereitgestellt werden. Die Pufferbereiche hierfür müssen sich nicht unbedingt im Bereich der Positioniereinrichtung 11 befinden, obwohl dies zugunsten einer schnellen Bereitstellung vorteilhaft wäre, sie könnten auch im Bereich einer Etikettiermaschine oder eines Füllers der jeweiligen Abfülllinie 17a, 17b angesiedelt sein.

Die Fig. 7a und 7b zeigen eine Variante, bei der ein erster, höherer Behältertyp 5a und ein zweiter, niedrigerer Behältertyp 5i auf einer Gebindelage 3a kombiniert werden. Dies ist insbesondere von Vorteil, wenn der erste Behältertyp 5a eine höhere Topload-Belastbarkeit aufweist als der zweite Behältertyp 5i. In diesem Fall kann die Last einer oberen Gebindelage 3a' von den Behältern 5 des ersten Behältertyps 5a der unteren Lage 3a getragen werden. Werden mehrere Lagen 3a, 3a' übereinander angeordnet, so ist es insbesondere von Vorteil, in der jeweils unteren Lage 3a eine größere Anzahl von Behältern 5 des ersten Behältertyps 5a mit höherer Topload-Belastbarkeit anzuordnen als in der oberen Lage 3a' (nicht dargestellt).

Somit können Behälter 5 mit unterschiedlicher Topload-Belastbarkeit derart auf übereinander angeordnete Behälterlagen 3a, 3a' verteilt werden, dass die Topload-Belastbarkeit der Lagen 3a, 3a' an die jeweils zu tragende Last angepasst ist. Dadurch kann ein auf dem Gebindeträger 7 zur Verfügung stehendes Verpackungsvolumen besonders effizient ausgenutzt werden. Anders gesagt, kann vermieden werden, dass eine obere Lage 3a' eine unnötig hohe Topload-Belastbarkeit aufweist, während die Belastbarkeit einer unteren Lage 3a aufgrund eines Überschreitens einer maximal zulässigen Topload-Belastbarkeit einzelner Behälter 5 auch bei insgesamt noch geringer Gesamtlast der Lage 3a überschritten wird. Auch hier ist es besonders vorteilhaft, die Behälter 5 mit großer Topload-Belastbarkeit im Randbereich, insbesondere an den Eckpositionen 3b der jeweiligen Behälterlage 3a, 3a' anzuordnen.

In Fig. 7b ist der Übersichtlichkeit halber eine obere Zwischenlage 7' dargestellt, die bezüglich der Funktionen der erfindungsgemäßen Vorrichtung 1 und der Durchführung des erfindungsgemäßen Verfahrens die gleiche Funktion wie der untere Gebindeträger 7 übernehmen kann. Die Zwischenlage 7' könnte aber auch lediglich zur Stabilisierung oder zugunsten eines einfacheren Positionierens der Behälter 5 oder einer einfacheren Handhabung beim der Auslieferung der Gebinde 3 vorgesehen sein. Die Zwischenlage 7' könnte auch aus dem Gebindeträger 7 bestehen.

Die Nummerierung der Behälter 5 als erster, zweiter, dritter Behältertyp usw. ist jeweils auf ein erfindungsgemäßes Gebinde 3 bezogen und nicht an spezielle Formen, Größen, Materialien oder mechanische Eigenschaften der beispielhaft beschriebenen Ausführungsformen. Somit könnte jeder der dargestellten Behältertypen 5a-5i im Sinne der Erfindung der erste oder zweite Behältertyp einer bestimmten Gebindevariante sein.

Die Erfindung wurde anhand einer einzigen Positioniereinrichtung 11 beschrieben, die alle Behälter 5 auf dem zu bestückenden Gebindeträger 7 absetzen kann. Es wäre aber auch möglich, dass die unterschiedlichen Behälter 5 von unterschiedlichen Positioniereinrichtungen 11 bereitgestellt werden, die den Gebindeträger 7 nacheinander bestücken. Dies kann die Handhabung bestimmter Behältertypen erleichtern und/oder die Flexibilität der erfindungsgemäßen Vorrichtung 1 weiter erhöhen.

Mit dem erfindungsgemäßen Verfahren lässt sich unter anderem wie folgt arbeiten:
Ein kontinuierlicher Strom P zu kommissionierender Behälter 5 bestehend aus mindestens einem ersten Behältertyp 5a und einem zweiten Behältertyp 5b wird der Bereitstellungseinrichtung 9 aus mindestens einer Abfülllinie 17a, 17b zugeführt. Hierbei sind die Behälter 5 jeweils mit Kennzeichnungen 13a, 13b versehen, die es ermöglichen, dass die Positioniereinrichtung 11 die bereitgestellten Behälter 5 den unterschiedlichen Behältertypen 5a, 5b zuordnen kann.

Durch eine nicht näher beschriebene Vorrichtung wird ein zu bestückender Gebindeträger 7 im Bereich der Positioniereinrichtung 11 bereitgestellt. Auf Grundlage einer von der Steuereinheit 15 an die Positioniereinrichtung 11 übermittelten Anforderung wird eine vorgegebene Anzahl von Behältern 5 des ersten Behältertyps 5a und eine vorgegebene Anzahl der Behälter 5 des zweiten Behältertyps 5b von der Bereitstellungseinrichtung 9 übernommen und auf dem Gebindeträger 7 an dafür vorgesehen freien Positionen angeordnet.

Hierbei spielt es für die Erfindung keine Rolle, in welcher Reihenfolge die Behältertypen 5a, 5b auf dem Gebindeträger 7 angeordnet werden. Vorzugsweise erfolgt die Anordnung der einzelnen Behälter 5 derart, dass eine möglichst gleichmäßige Auslastung der Bereitstellungseinrichtung 9, beispielsweise einzelner zuführender Gassen 9a, 9b ermöglicht wird, und/oder dass die die Behälter 5 in möglichst kurzer Zeit zu einem Gebinde mit großer Packungsdichte zusammen gestellt werden können.

Die Kennzeichnung und Zuordnung der Behälter 5 bezüglich der Behältertypen 5a, 5b erfolgt vorzugsweise beim Durchlaufen der zugeordneten Abfülllinie 17a, 17b, insbesondere bei der Abfüllung und/oder Inspektion der Behälter 5, gegebenenfalls aber auch bei der Herstellung der Behälter 5, durch Aufbringen einer Markierung auf den Behältern 5 und/oder durch Zuweisen einer elektronischen Positionsmarke bezüglich des laufenden Produktionsstroms P.

Nach Bestücken des Gebindeträgers 7 mit einer unteren Gebindelage 3a bestehend aus den Behältern 5 des ersten Behältertyps 5a und des zweiten Behältertyps 5b wird je nach Anforderung der Steuereinrichtung 15 und/oder des Prozessfortschritts eine weitere Gebindelage 3a' auf dem Gebindeträger 7 angeordnet oder dieser zur Weiterverarbeitung abtransportiert und durch einen leeren Gebindeträger 7 ersetzt, um diesen entsprechend einer neuen Anweisung der Steuereinheit 15 zu bestücken.

## Patentansprüche

1. Verfahren zum Zusammenstellen eines Sammelgebindes aus befüllten Behältern in einer Abfüllanlage, insbesondere für Getränke oder pharmazeutische Produkte, mit folgenden Schritten:
a) Bereitstellen der befüllten Behälter in Form von Glasflaschen, Kunststoffflaschen, Kanistern, Fässern und/oder Kunststoffbeuteln, wobei die Behälter mindestens einen ersten und einen zweiten Behältertyp umfassen, und wobei sich der erste und der zweite Behältertyp hinsichtlich mindestens eines Behälterparameters aus der folgenden Parametergruppe unterscheiden: Höhe, Grundflächeninhalt, Grundflächenform und mechanische Belastbarkeit des Behälters;
b) Anordnen der bereitgestellten Behälter auf einem Gebindeträger, wobei die Anordnung der Behälter bezüglich der Anzahl und/oder der Position und/oder der Drehlage der Behälter auf dem Gebindeträger in Abhängigkeit von dem mindestens einen Behälterparameter des ersten und zweiten Behältertyps erfolgt.

2. Verfahren nach Anspruch 1, wobei der erste Behältertyp eine höhere Topload-Belastbarkeit hat und insbesondere höher ist als der zweite Behältertyp.

3. Verfahren nach Anspruch 1 oder 2, wobei: der erste Behältertyp eine höhere Topload-Belastbarkeit hat als der zweite Behälter; und die Behälter in mindestens einer oberen und einer unteren Lage auf dem Gebindeträger derart angeordnet werden, dass die Anzahl der Behälter des ersten Behältertyps in der unteren Lage größer ist als in der oberen Lage.

4. Verfahren nach wenigstens einem der vorigen Ansprüche, wobei der erste Behältertyp eine höhere Topload-Belastbarkeit hat als der zweite Behälter; und die Behälter zu einem in der Draufsicht polygonalen Gebinde zusammengestellt und an Eckpositionen des Gebindes Behälter des ersten Behältertyps angeordnet werden.

5. Verfahren nach wenigstens einem der vorigen Ansprüche, wobei in den Behältern des ersten Behältertyps ein höherer Druck herrscht als in den Behältern des zweiten Behältertyps.

6. Verfahren nach wenigstens einem der vorigen Ansprüche, wobei die Behälter vom ersten Behältertyp Flaschen sind und die Behälter vom zweiten Behältertyp Beutel.

7. Verfahren nach einem der vorigen Ansprüche, wobei die Behälter des ersten und des zweiten Behältertyps unterschiedliche Grundflächen aufweisen; zumindest die Grundfläche des ersten oder zweiten Behältertyps polygonal ist; und zumindest zwei Begrenzungslinien benachbarter polygonaler Grundflächen zueinander parallel oder orthogonal ausgerichtet sind.

8. Verfahren nach wenigstens einem der vorigen Ansprüche, wobei den Behältern dem jeweiligen Behältertyp entsprechend jeweils mindestens ein Kennzeichen zugeordnet wird; und das Bereitstellen im Schritt a) und/oder das Anordnen im Schritt b) in Abhängigkeit von dem mindestens einen Kennzeichen gesteuert wird.

9. Verfahren nach Anspruch 8, wobei das Kennzeichen auf den Behältern angebracht wird und/oder das Kennzeichen eine elektronische Positionsmarke des jeweiligen Behälters bezüglich des laufenden Produktionsstroms ist.

10. Verfahren nach wenigstens einem der vorigen Ansprüche, wobei das Bereitstellen im Schritt a) und/oder das Anordnen im Schritt b) auf Grundlage eines Kommissionierungsauftrags automatisch erfolgt.

11. Verfahren nach wenigstens einem der vorigen Ansprüche, wobei im Schritt a) die Behälter des ersten und des zweiten Behältertyps von einer gemeinsamen Einwegbehälterlinie bereitgestellt werden oder die Behälter des zweiten Behältertyps von einer Einwegbehälterlinie und die Behälter des ersten Behältertyps von einer parallel betriebenen Mehrwegbehälterlinie.

12. Verfahren zum Herstellen eines Gebindes aus befüllten Behältern in einer Abfüllanlage, umfassend das Verfahren nach wenigstens einem der vorigen Ansprüche und ein Verfahren zum Streckblasen der zu befüllenden Behälter aus Vorformlingen, wobei die Vorformlinge voneinander unabhängig vorgewärmt und beim Blasen mit Hilfe separater Linearmotor- oder Servoantriebe gestreckt werden und/oder die Behälter mit unterschiedlichen Drücken und/oder Blaszeitpunkten geblasen werden.

13. Vorrichtung (1) zum Zusammenstellen eines Sammelgebindes (3, 3', 3") aus befüllten Behältern (5) in einer Abfüllanlage, insbesondere für Getränke oder pharmazeutische Produkte, mit:
- einer Bereitstellungseinrichtung (9) zum Bereitstellen unterschiedlicher befüllter Behälter in Form von Glasflaschen, Kunststoffflaschen, Kanistern, Fässern und/oder Kunststoffbeuteln, wobei die Behälter mindestens einen ersten und einen zweiten Behältertyp (5a-5i) umfassen, die sich hinsichtlich mindestens eines der folgenden Behälterparameter unterscheiden: Höhe, Grundflächeninhalt, Grundflächenform und mechanische Belastbarkeit des Behälters; und
- einer Positioniereinrichtung (11) zum Anordnen der bereitgestellten Behälter auf einem Gebindeträger (7, 7'), wobei die Positioniereinrichtung derart ausgebildet ist, dass sie die Behälter bezüglich der Anzahl und/oder der Position und/oder der Drehlage der Behälter in Abhängigkeit von dem mindestens einen unterschiedlichen Behälterparameter des ersten und zweiten Behältertyps anordnen kann.

14. Vorrichtung nach Anspruch 13, ferner umfassend eine Kennzeichnungseinrichtung (9d, 15), um jedem Behälter (5) mindestens ein dem jeweiligen Behältertyp (5a-5c) entsprechendes Kennzeichen (13a-13c) zuzuordnen.

15. Vorrichtung nach Anspruch 14, bei der die Kennzeichnungseinrichtung (9d, 15) ausgebildet ist, um eine Markierung an den Behältern anzubringen und/oder ein Steuersignal zu erzeugen, das dem jeweiligen Behälter eine Position im laufenden Produktionsstrom (P) zuweist.

16. Vorrichtung nach Anspruch 14 oder 15, ferner mit einer Steuereinrichtung (15), die ausgebildet ist, um die Bereitstellungseinrichtung (9) und/oder die Positioniereinrichtung (11) mit Hilfe des jeweils zugeordneten Kennzeichens (13a-13c) zu steuern.

17. Vorrichtung nach wenigstens einem der Ansprüche 13 bis 16, bei der die Bereitstellungseinrichtung (9) im Produktionsstrom (P) hinter einer Einwegbehälterlinie (17b) zur Abfüllung der Behälter (5) des ersten und zweiten Behältertyps (5a-5i) angeordnet ist oder hinter einer Mehrwegbehälterlinie (17a) zur Abfüllung der Behälter des ersten Behältertyps und einer Einwegbehälterlinie (17b) zur Abfüllung der Behälter des zweiten Behältertyps.

18. Vorrichtung zum Herstellen von Gebinden aus befüllten Behältern, umfassend die Vorrichtung (1) nach wenigstens einem der Ansprüche 13 bis 17 sowie ferner eine Streckblasmaschine (21) mit einer Vorwärmeinrichtung mit Einzel-Heizkammern zum voneinander unabhängigen Vorwärmen einlaufender Vorformlinge und mit von Linear- oder Servomotoren individuell angetriebenen Reckdornen.

## Claims

1. Method for assembling a handling unit of filled containers in a filling plant, especially for beverages or pharmaceutical products, comprising the following steps:
a) supplying the filled containers in the form of glass bottles, plastic bottles, canisters, barrels, and/or plastic bags, the containers comprising at least a first and a second container type, and the first and second container type being different with respect to at least one container parameter from the following group of parameters: height, base area, base area shape and the mechanical load capacity of the container;
b) arranging the supplied containers on a handling unit carrier, wherein the arrangement of the containers with respect to the number and/or the position and/or the rotational position of the containers on the handling unit carrier is made in dependence on the at least one container parameter of the first and second container type.

2. Method according to claim 1, wherein the first container type has a greater top load carrying capacity and, in particular, is higher than the second container type.

3. Method according to claim 1 o 2, wherein the first container type has a greater top load carrying capacity than the second container; and the containers are arranged in at least one upper and one lower layer on the handling unit carrier in such a way that the number of the containers of the first container type in the lower layer is greater than in the upper layer.

4. Method according to at least one of the preceding claims, wherein the first container type has a greater top load carrying capacity than the second container; and the containers are assembled to form, in a top view, a polygonal handling unit, with containers of the first container type being arranged at corner positions of the handling unit.

5. Method according to at least one of the preceding claims, wherein the pressure in the containers of the first container type is higher than in the containers of the second container type.

6. Method according to at least one of the preceding claims, wherein the containers of the first container type are bottles and the containers of the second container type are bags.

7. Method according to one of the preceding claims, wherein the containers of the first and of the second container type have different base areas; at least the base area of the first or second container type is polygonal; and at least two boundary lines of adjacent polygonal base areas are oriented in parallel or orthogonally relative to each other.

8. Method according to at least one of the preceding claims, wherein each of the containers is assigned at least one identification sign corresponding to the respective container type; and the supply in step a) and/or the arrangement in step b) are controlled in dependence on the at least one identification sign.

9. Method according to claim 8, wherein the identification sign is applied to the containers, and/or the identification sign is an electronic position marker of the respective container with respect to the running production flow.

10. Method according to at least one of the preceding claims, wherein the supply in step a) and/or the arrangement in step b) are performed automatically on the basis of a picking order.

11. Method according to at least one of the preceding claims, wherein the containers of the first and of the second container type are supplied in step a) by a shared disposable container line, or the containers of the second container type are supplied by a disposable container line and the containers of the first container type are supplied by a parallel-operated reusable container line.

12. Method for producing a handling unit of filled containers in a filling plant, comprising the method according to at least one of the preceding claims as well as a method for stretch blow molding the containers to be filled from preforms, wherein the preforms are preheated independently of each other and, during the blowing, are stretched by means of separate linear motor drives or servo drives, and/or the containers are blown at different pressures and/or blowing times.

13. Device (1) for assembling a handling unit (3, 3', 3") of filled containers (5) in a filling plant, especially for beverages or pharmaceutical products, comprising:
- a supply unit (9) for supplying different filled containers in the form of glass bottles, plastic bottles, canisters, barrels, and/or plastic bags, the containers comprising at least a first and a second container type (5a-5i) which are different with respect to at least one of the following container parameters: height, base area, base area shape and the mechanical load capacity of the container; and
- a positioning unit (11) for arranging the supplied containers on a handling unit carrier (7, 7'), the positioning unit being adapted to be capable of arranging the containers with respect to the number and/or the position and/or the rotational position of the containers in dependence on the at least one different container parameter of the first and second container type.

14. Device according to claim 13, further comprising an identification unit (9d, 15) for assigning to each container (5) at least one identification sign (13a-13c) corresponding to the respective container type (5a-5c).

15. Device according to claim 14, in which the identification unit (9d, 15) is adapted to apply a marker to the containers and/or to generate a control signal which assigns a position to the respective container in the running production flow (P).

16. Device according to claim 14 or 15, further comprising a control unit (15) which is adapted to control the supply unit (9) and/or the positioning unit (11) with the aid of the respectively assigned identification sign (13a-13c).

17. Device according to at least one of claims 13 to 16, in which the supply unit (9) is arranged in the production flow (P) downstream of a disposable container line (17b) for filling the containers (5) of the first and the second container type (5a-5i), or downstream of a reusable container line (17a) for filling the containers of the first container type and a disposable container line (17b) for filling the containers of the second container type.

18. Device for producing handling units of filled containers, comprising the device (1) according to at least one of claims 13 to 17 as well as furthermore a stretch blow molding machine (21) having a preheater with individual heating chambers for preheating incoming preforms independently of each other, and comprising stretching mandrels individually driven by linear motors or servo motors.

## Revendications

1. Procédé d'assemblage d'une gerbe à partir de récipients remplis dans une installation de remplissage, en particulier pour des boissons ou des produits pharmaceutiques, comprenant les étapes suivantes :
a) Mise à disposition des récipients remplis sous forme de bouteilles en verre, de bouteilles en plastique, de bidons, de fûts et/ou de sacs en plastique, les récipients comprenant au moins un premier et un seconde type de récipient, et le premier et le second type de récipient se distinguant par au moins un paramètre de récipient du groupe de paramètres suivant: la hauteur, le contenu de la surface de base, la forme de la surface de base et la capacité de charge mécanique du récipient;
b) Disposition des récipients prévus sur un porte-récipients, la disposition des récipients par rapport au nombre et/ou à la position et/ou à la position de rotation des récipients sur le porte-gerbe étant effectuée en fonction d'au moins un paramètre du premier et du seconde type de récipient.

2. Procédé selon la revendication 1, dans lequel le premier type de récipient a une capacité de charge supérieure et est en particulier plus élevé que le second type de récipient.

3. Procédé selon les revendications 1 ou 2, dans lequel le premier type de récipient a une capacité de chargement par le haut plus élevée que le second type de récipient; et les récipients sont disposés en au moins une couche supérieure et une couche inférieure sur le porte-gerbe de telle sorte que le nombre de récipients du premier type de récipient est plus important dans la couche inférieure que dans la couche supérieure.

4. Procédé selon au moins une des revendications précédentes, dans lequel le premier type de récipient a une capacité de chargement par le haut plus élevée que le second récipient; et les récipients sont assemblés pour former une gerbe qui est polygonale en vue de dessus et les récipients du premier type de récipient sont disposés aux coins du récipient.

5. Procédé selon au moins une des revendications précédentes, dans lequel une pression plus élevée règne dans les récipients du premier type de récipient que dans les récipients du second type de récipient.

6. Procédé selon au moins une des revendications précédentes, dans lequel les récipients du premier type de récipient sont des bouteilles et les récipients du second type de récipient sont des sacs.

7. Procédé selon l'une des revendications précédentes, dans lequel les récipients du premier et du second type de récipients ont des surfaces de base différentes; au moins la surface de base du premier ou du second type de récipients est polygonale; et au moins deux lignes de délimitation de surfaces de base polygonales adjacentes sont orientées parallèlement ou orthogonalement l'une par rapport à l'autre.

8. Procédé selon au moins une des revendications précédentes, dans lequel au moins un identificateur est attribué à chacun des récipients selon le type de récipient respectif; et la disposition de l'étape a) et/ou la disposition de l'étape b) est contrôlée en fonction dudit au moins un identificateur.

9. Procédé selon la revendication 8, dans lequel l'identification est appliquée sur les récipients et/ou l'identification est une marque de position électronique du récipient respectif par rapport au flux de production actuel.

10. Procédé selon au moins une des revendications précédentes, dans lequel la mise à disposition à l'étape a) et/ou la commande à l'étape b) est effectuée automatiquement sur la base d'une demande de prélèvement.

11. Procédé selon au moins une des revendications précédentes, dans lequel à l'étape a) les récipients du premier et du second type de récipients sont fournis par une ligne commune de récipients jetables ou les récipients du second type de récipients sont fournis par une ligne de récipients jetables et les récipients du premier type de récipients sont fournis par une ligne de récipients réutilisables fonctionnant en parallèle.

12. Procédé de fabrication d'une gerbe à partir de récipients remplis dans une installation de remplissage, comprenant le procédé selon au moins une des revendications précédentes et un procédé d'étirage-soufflage des récipients à remplir à partir de préformes, dans lequel les préformes sont préchauffées indépendamment les unes des autres et sont étirées pendant le soufflage au moyen de moteurs linéaires ou de servomoteurs séparés et/ou les récipients sont soufflés à des pressions et/ou des temps de soufflage différents.

13. Dispositif (1) pour assembler une gerbe (3, 3', 3") à partir de récipients remplis (5) dans une installation de remplissage, en particulier pour des boissons ou des produits pharmaceutiques, avec:
- un dispositif d'alimentation (9) pour l'alimentation de différents récipients remplis sous forme de bouteilles en verre, de bouteilles en plastique, de bidons, de fûts et/ou de sacs en plastique, dans lequel les récipients comprennent au moins un premier et un second type de récipient (5a-5i) qui diffèrent en ce qui concerne au moins un des paramètres de récipient suivants: la hauteur, la surface de base, la forme de base et la résistance mécanique du récipient; et
- des moyens de positionnement (11) pour disposer les récipients prévus sur un porte-gerbe (7, 7'), les moyens de positionnement étant conçus pour disposer les récipients en fonction du nombre et/ou de la position et/ou de la position de rotation des récipients en fonction d'au moins un paramètre différent du premier et du second type de récipient.

14. Appareil selon la revendication 13, comprenant en outre des moyens d'identification (9d, 15) pour associer à chaque récipient (5) au moins une étiquette (13a-13c) correspondant au type de récipient respectif (5a-5c).

15. Appareil selon la revendication 14, dans lequel le dispositif de marquage (9d, 15) est conçu pour appliquer un marquage sur les récipients et/ou pour générer un signal de commande qui assigne au récipient respectif une position dans le flux de production actuel (P).

16. Appareil selon les revendications 14 ou 15, comprenant en outre des moyens de commande (15) conçus pour commander les moyens d'alimentation (9) et/ou les moyens de positionnement (11) au moyen de l'identificateur respectivement associé (13a-13c).

17. Dispositif selon au moins l'une des revendications 13 à 16, dans lequel le dispositif d'alimentation (9) est disposé dans le flux de production (P) en aval d'une ligne de récipients jetables (17b) pour le remplissage des récipients (5) du premier et du second type de récipients (5a-5i) ou en aval d'une ligne de récipients consignés (17a) pour le remplissage des récipients du premier type de récipients et d'une ligne de récipients jetables (17b) pour le remplissage des récipients du second type de récipients.

18. Dispositif pour la fabrication de récipients à partir de récipients remplis, comprenant le dispositif (1) selon au moins une des revendications 13 à 17 ainsi qu'une machine d'étirage-soufflage (21) avec un dispositif de préchauffage avec des chambres de chauffage individuelles pour le préchauffage des préformes entrantes indépendamment les unes des autres et avec des mandrins d'étirage entraînés individuellement par des moteurs linéaires ou des servomoteurs.
